# EUROPÄISCHE PATENTSCHRIFT

(11) **EP 1 284 839 B1**
(45) Veröffentlichungstag und Bekanntmachung des Hinweises auf die Patenterteilung: **18.01.2006**
(21) Anmeldenummer: 01943283.0
(22) Anmeldetag: 25.04.2001
(51) Int. Cl.: B23K 26/03, B23K 26/06

(54) **LASER-BEARBEITUNG VON MATERIALIEN**
LASER MACHINING OF MATERIALS
USINAGE AU LASER DE MATERIAUX

(30) Priorität: 27.04.2000 DE 10020559
(43) Veröffentlichungstag der Anmeldung: 26.02.2003
(73) Patentinhaber: LASER ZENTRUM HANNOVER e.V., D-30419 Hannover (DE)
(72) Erfinder: LUBATSCHOWSKI, Holger, 30989 Gehrden (DE); HEISTERKAMP, Alexander, 30159 Hannover (DE); MAATZ, Gero, 80995 München (DE)
(74) Vertreter: Eisenführ, Speiser & Partner
(86) Internationale Anmeldenummer: PCT/EP2001/004629
(87) Internationale Veröffentlichungsnummer: WO 2001/083155

(56) Entgegenhaltungen:
- EP-A- 0 956 809
- WO-A-99/67048
- DE-A- 19 904 565
- US-A- 6 004 314
- NOLTE, S.: "Mikromaterialbearbeitung mit ultrakurzen Laserpulsen" 1999 , CUVILIER VERLAG , GÖTTINGEN (DE) XP002178114 in der Anmeldung erwähnt Kapitel 4.2.4, Seite 70 -Seite 74
- LOESEL F H ET AL: "NON-THERMAL ABLATION OF NEURAL TISSUE WITH FEMTOSECOND LASER PULSES" APPLIED PHYSICS B: LASERS AND OPTICS, SPRINGER INTERNATIONAL, BERLIN, DE, Bd. B66, 1998, Seiten 121-128, XP001016436 ISSN: 0946-2171 in der Anmeldung erwähnt
- MOMMA C ET AL: "PRAEZISE MIKRO-BEARBEITUNG MIT FEMTOSEKUNDEN-LASERPULSEN PRECISE MICROMACHINING WITH FEMTOSECOND LASER PULSES" LASER UND OPTOELEKTRONIK, FACHVERLAG GMBH. STUTTGART, DE, Bd. 29, Nr. 3, 1997, Seiten 82-89, XP000997011 ISSN: 0722-9003 in der Anmeldung erwähnt
- SALIN F ET AL: "MODE LOCKING OF TI:AL2O3 LASERS AND SELF-FOCUSING: A GAUSSIAN APPROXIMATION" OPTICS LETTERS, OPTICAL SOCIETY OF AMERICA, WASHINGTON, US, Bd. 16, Nr. 21, 1. November 1991 (1991-11-01), Seiten 1674-1676, XP000232618 ISSN: 0146-9592 in der Anmeldung erwähnt
- LUBATSCHOWSKI H ET AL: "APPLICATION OF ULTRASHORT LASER PULSES FOR INTRASTROMAL REFRACTIVE SURGERY" GRAEFE'S ARCHIVE FOR CLINICAL AND EXPERIMENTAL OPHTHALMOLOGY, SPRINGER VERLAG, XX, Bd. 238, Januar 2000 (2000-01), Seiten 33-39, XP001014554 ISSN: 0721-832X in der Anmeldung erwähnt
- MOUROU G: "THE ULTRAHIGH-PEAK-POWER LASER: PRESENT AND FUTURE" APPLIED PHYSICS B: LASERS AND OPTICS, SPRINGER INTERNATIONAL, BERLIN, DE, Bd. 65, 1997, Seiten 205-211, XP000997010 ISSN: 0946-2171 in der Anmeldung erwähnt
- BREZINSKI M E ET AL: "OPTICAL COHERENCE TOMOGRAPHY: HIGH-RESOLUTION IMAGING IN NONTRANSPARENT TISSUE" IEEE JOURNAL OF SELECTED TOPICS IN QUANTUM ELECTRONICS, IEEE SERVICE CENTER, US, Bd. 5, Nr. 4, Juli 1999 (1999-07), Seiten 1185-1192, XP000893467 ISSN: 1077-260X in der Anmeldung erwähnt

## Beschreibung

Die vorliegende Erfindung betrifft eine Vorrichtung und ein Verfahren zur Laser-Bearbeitung von Materialien wie z.B. metallischen Werkstoffen (Metalle, Legierungen), Keramiken, Gläsern, Kunststoffen, Cellulose-Werkstoffen (Papier, Pappe etc.), biologischen Geweben, Flüssigkeiten.

Die Anwendung von ultrakurzen Laserpulsen, d.h. Pulsen mit einer Pulsdauer im Bereich zwischen ungefähr 10⁻¹⁵ s und 5 x 10⁻¹⁰ s zum Zwecke hochpräziser Laser-Mikrostrukturierungen ist bekannt.

So beschreiben C. Momma *et al* in "Präzise Mikro-Bearbeitung mit Femtosekunden-Laserpulsen/Precise Micromachining with Femtosecond Laser Pulses", Laser- und Optoelektronik 29(3)/1997, Untersuchungen zur Laser-Ablation von metallischen Werkstoffen mit Pulsdauern von 150 fs bis in den Nanosekunden-Bereich.

S. Nolte setzt sich in seiner Dissertation zur "Mikromaterialbearbeitung mit ultrakurzen Laserpulsen", Cuvillier Verlag Göttingen, 1999 mit Aspekten der Materialbearbeitung unter Einsatz von Femtosekunden-Laserpulsen auseinander.

H. Lubatschowski *et al* beschreiben in einem Artikel zur "Application of ultrashort laser pulses for intrastromal refractive surgery", Graefe's Arch. Clin. Exp. Ophthalmol 238:33-39, 2000 den Einsatz von Lasersystemen, die ultrakurze Laserpulse mit einer Dauer von 100-200 Femtosekunden erzeugen, im Bereich der intrastromalen refraktiven Chirurgie.

Kurtz *et al,* "Optimal Laser Parameters for Intrastromal Corneal Surgery", SPIE, Vol. 3255, 56-66, Januar 1998, verwenden ebenfalls ultrakurze Laserpulse zur Gewebebearbeitung.

Loesel *et al*, "Non-thermal ablation of neutral tissue with femtosecond laser pulses", Appl. Phys. B , 66, 121-8, 1998, befassen sich mit vergleichbaren Aufgabenstellungen.

In der WO 99/67048 beschreiben Michael D. Perry and Brent C. Stuart Verfahren zum "Ultrashort Pulse Laser Machining of Metals and Alloys". Sie erläutern dabei den Einsatz von Laserpulsen mit einer Repetitionsrate, die größer ist als 1 Hz und sogar über 2 kHz liegen kann, wobei die Laserstrahlen eine Wellenlänge im Bereich zwischen 0,18 und 10µm besitzen und die Pulsdauer zwischen 10 fs und 100 ps liegt; für die Intensität (= Leistungsdichte) werden Werte oberhalb 10¹² W/cm² angegeben.

Üblicherweise werden Femtosekunden-Pulse mit zur Materialbearbeitung ausreichender Energie (im µJ- bis mJ-Bereich) im Wege der sogenannten "chirped-pulse"-Verstärkung erzeugt. Vergleiche hierzu D. Strickland, G. Mourou. Opt. Commun. 56. 219 (1985) und die WO99/67048. Bei dieser Verstärkungstechnik werden in einem modengekoppelten Oszillator zunächst Pulse mit einer Dauer von beispielsweise rund 100 fs erzeugt. Die Pulse werden zunächst zeitlich gedehnt. Dies erfolgt in einer "Stretcher" genannten Baueinheit, die eine spezielle Anordnung von Dispersionsgittern umfaßt und bewirkt, daß die unterschiedlichen Wellenlängenanteile des Pulses (die Bandbreite eines 100 fs-Pulses beträgt ca. 10 nm bei einer Mittenwellenlänge von 800 nm) verschieden lange optische Wege zurücklegen. Der Puls wird um mehr als drei Größenordnungen von 100 fs auf einige 100 ps reversibel gestreckt. Aufgrund der so reduzierten Intensität erfolgt die nachfolgende Verstärkung unter Vermeidung nicht-linearer Effekte, die eine Störung des räumlichen Pulsprofils zur Folge haben würden und zur Zerstörung des Verstärkermediums führen könnten. Der verstärkte Puls wird anschließend durch ein "Kompressor" genanntes Bauelement, welches ebenfalls aus Dispersionsgittern besteht, wieder auf nahezu seine ursprüngliche Dauer komprimiert.

Ein typischer modengekoppelter Oszillator zur Erzeugung von fs-Laserpuls wird von C. Momma *et al,* Laser- und Optoelektronik 29(3)/1997, S. 85 unter Bezugnahme auf F. Salin *et al,* Opt. Lett. 16.1674 (1991) angegeben.

H. Lubatschowski *et al,* Graefe's Arch. Clin. Exp. Ophthalmol 238:33-39, 2000, verwenden für ihre Untersuchungen ein "Kerr-Lens"-modengekoppelten Titan-Saphir-Lasersystem mit nachfolgender "chirped pulse" - Verstärkung und verweisen insoweit auf Morou G (1997) "The ultra high-peak power laser: present and future" Appl. Phys. B 65:205-211.

Weitere Systeme zur definierten Erzeugung ultrakurzer Laserpulse (fs-Laserpulse) sind dem Fachmann aus der einschlägigen Literatur bekannt.

Im Rahmen der vorliegenden Erfindung können Lasersysteme der in den vorgenannten Literaturstellen genannten Art eingesetzt werden.

Allgemein, d.h. auch im Rahmen der vorliegenden Erfindung, lassen sich ultrakurze Laserpulse zum Schneiden von Material (z.B. metallischen Werkstoffen), zum Abtragen und Strukturieren von Material (z.B. biologischem Gewebe) und zum Ändern von Materialeigenschaften (z.B. der Änderung von Brechungsindizes in Glas) einsetzen.

Die besonderen Vorteile der Materialbearbeitung mit ultrakurzen Laserpulsen (fs-Laserpulsen) zeigen sich insbesondere beim äußerst präzisen und sowohl thermisch als auch mechanisch minimal schädigenden Schneiden und/oder Abtragen von Materialien. Durch Fokussieren der ultrakurzen Laserpulse wird im Fokus auf sehr begrenztem Raum durch Zünden eines Mikroplasmas Energie deponiert und durch sog. Photodisruption eine Schnittwirkung bzw. Material-Ablation erreicht. Es lassen sich Abtragraten im sub-µm-Bereich mit Schnittbreiten von weniger als 500 nm erreichen. Aufgrund eines nichtlinearen Wechselwirkungsmechanismus bei der Photodisruption ist der Materialabtrag dabei weitgehend unabhängig von den Materialeigenschaften. Insbesondere können unter Einsatz von fs-Laserpulsen auch Materialien mit hoher Wärmeleitung (wie z.B. Metalle) und Materialien mit geringer Laser-Lichtabsorption (wie z.B. Polymere oder bestimmte biologische Gewebe) bearbeitet werden.

Alternativ zur Ablation auf der Oberfläche eines zu behandelnden Materials läßt sich durch Fokussieren in für die Laserstrahlung transparente Materialien (wie z.B. die Hornhaut eines Auges) auch ein Schneideffekt im Inneren des transparenten Materials (Gewebes) erreichen.

Die Anwendung der fs-Laserpuls-Technik zum Bearbeiten von Materialien ist allerdings bislang eher unbequem. So stehen bisher keine geeigneten Mittel zur Online-Kontrolle des Bearbeitungsergebnisses zur Verfügung. Im Regelfall wird deshalb derzeit bei der fs-Materialbearbeitung das Bearbeitungsresultat, z.B. eine erzielte Schnittiefe, erst nach der Bearbeitung ermittelt, z.B. licht- oder elektronenmikroskopisch. Ist eine Nachbearbeitung des Materials erforderlich, muß die Materialprobe neu positioniert werden, was mit der gewünschten oder sogar erforderlichen Präzision jedoch im Regelfall nicht mehr möglich ist. Es wird daher häufig auf semi-empirischen Wege zunächst die Abtragstiefe pro Puls bestimmt und die Schnittiefe in der zu bearbeitenden Probe dann prospektiv über das Zählen der Laserpulse geschätzt. Diese Vorgehensweise wird in zunehmendem Maße als unbefriedigend empfunden.

Es war daher die Aufgabe der vorliegenden Erfindung, eine Vorrichtung und ein Verfahren zur Laser-Bearbeitung eines z.B. im festen oder flüssigen Aggregatszustand vorliegenden Materials mit ultrakurzen Laserpulsen anzugeben, welche bzw. welches auf einfachem Wege eine Kontrolle des Resultats einer Bearbeitung mit ultrakurzen Laserpulsen ermöglicht.

Vorzugsweise sollten die Vorrichtung und das Verfahren dabei so ausgelegt sein, daß eine online-Kontrolle möglich ist.

Gemäß einem ersten Aspekt der vorliegenden Erfindung wird die gestellte Aufgabe gelöst durch eine Vorrichtung zur Bearbeitung eines Materials mit ultrakurzen Laserpulsen, umfassend
(a) eine Einrichtung zum Erzeugen einer Abfolge erster Laserpulse, wobei
   - die ersten Laserpulse jeweils eine Dauer unter 300 Pikosekunden besitzen und
   - die Repetitionsrate für die ersten Laserpulse im Bereich zwischen 100 kHz und 1 GHz liegt,
(b) eine Umwandlungseinrichtung zum Umwandeln eines ersten Satzes der Abfolge erster Laserpulse in eine Abfolge zweiter Laserpulse_zur Applikation auf das und zur Bearbeitung des Materials, wobei
   - die zweiten Laserpulse jeweils eine Dauer unter 300 Pikosekunden besitzen und
   - die Repetitionsrate für die zweiten Laserpulse im Bereich zwischen 1 Hz und 1 MHz liegt,
   sowie
(c) eine Untersuchungseinrichtung, die dazu eingerichtet ist, erste Laserpulse, die nicht zum ersten Satz gehören, auf das Material zu applizieren, bestimmte Resultate dieser Applikation zu detektieren und diese detektierten Resultate als Information bereitzustellen.

Gemäß einem zweiten Aspekt der vorliegenden Erfindung wird die gestellte Aufgabe gelöst durch ein Verfahren zur Bearbeitung eines Materials mit ultrakurzen Laserpulsen, mit folgenden Schritten:
(a) Erzeugen einer Abfolge erster Laserpulse, wobei
   - die ersten Laserpulse jeweils eine Dauer unter 300 Pikosekunden besitzen und
   - die Repetitionsrate für die ersten Laserpulse im Bereich zwischen 100 kHz und 1 GHz liegt,
(b) Umwandeln eines Satzes erster Laserpulse in eine Abfolge zweiter Laserpulse zur Bearbeitung des Materials, wobei
   - die zweiten Laserpulse jeweils eine Dauer unter 300 Pikosekunden besitzen und
   - die Puls-Repetitionsrate im Bereich zwischen 1 Hz und 1 MHz liegt,
(c) Applizieren einer Abfolge ausgewählter zweiter Laserpulse auf das Material, um dieses zu bearbeiten,
(d) Applizieren eines zweiten Satzes erster Laserpulse auf das Material, um dieses zu untersuchen.

Die Erfindung beruht auf der überraschenden Erkenntnis, daß Lasersysteme zur fs-Materialbearbeitung, die sich der Chirped-Pulse-Verstärkungstechnik bedienen und entsprechende Laserpuls-Umwandlungseinrichtungen besitzen, im Zeitraum zwischen je zwei aufeinanderfolgenden verstärkten Pulsen (vorstehend "zweitePulse" genannt) eine Vielzahl von unverstärkten Pulsen (vorstehend "erste Pulse" genannt) emittieren, die bislang als überflüssiger Ballast nicht weiter beachtet wurden, sich aber hervorragend zur Untersuchung des zu bearbeitenden Materials einsetzen lassen.

Die unverstärkten (ersten) Laserpulse besitzen in der Regel eine um mehrere Größenordnungen höhere Repetitionsrate als die verstärkten (zweiten) Laserpulse. Während die Repetitionsrate der unverstärkten Pulse typischerweise im MHz-Bereich liegt, wird die Repetitionsrate der verstärkten (zweiten) Pulse in den meisten Fällen im kHz-Bereich liegen.

Während sich die Pulsenergie der unverstärkten (ersten) Laserpulse üblicherweise im Bereich von 1 pJ - 1000 nJ befindet, liegt die Pulsenergie verstärkter (zweiter) Laserpulse in der Regel im Bereich zwischen 1 µJ und 100 mJ. Zur Materialbearbeitung wird die Intensität der zweiten Laserpulse in der Regel auf einen Wert eingestellt, der größer ist als 10¹⁰ W/cm².

Erfindungsgemäß besitzen die unverstärkten ersten Laserpulse jeweils eine Dauer unter 300 Pikosekunden, vorzugsweise zwischen 10 Femtosekunden und 300 Pikosekunden. Pulsdauern unter 10 Femtosekunden lassen sich derzeit nicht ohne weiteres erzielen, wären aber für die Zwecke der Erfindung brauchbar. Längere Pulsdauern führen zu einer Verschlechterung des Bearbeitungsergebnisses und gestatten in der Regel keine gute Ortsauflösung bei der Untersuchung. Die geringen Kohärenzlängen der bevorzugten unverstärkten (ersten) Laserpulse erlauben hingegen Auflösungen, die der Abtragtiefe beim Materialabtrag mittels gleichlanger verstärkter (zweiter) Pulse im wesentlichen entspricht. Sie gestatten daher eine optimale Online-Bearbeitungskontrolle.

In bevorzugten Ausführungsformen dererfindungsgemäßen Vorrichtung umfaßtdie Umwandlungseinrichtung einen selektiven Pulsverstärker wie z.B. einen regenerativen Verstärker, beispielsweise als Chirped-Pulse-Verstärker, in dem nur ein kleiner Bruchteil der ersten Pulse (hoch)verstärkt wird. Die verstärkten und die unverstärkten Oszillatorpulse gelangen dann in der Regel auf gleiche Weise zum Ausgang des Verstärkersystems und werden auf das zu bearbeitende und zu untersuchende Material gerichtet.

Die verstärkten (zweiten) Laserpulse, die mit einer deutlich geringeren Repetitionsrate als die unverstärkten (ersten) Laserpulse aus dem Verstärkersystem austreten, tragen zur Materialbearbeitung (z.B. zur Materialablation) bei.

Die Strahlung der unverstärkten (ersten) Laserpulse im zu bearbeitenden Material wird hingegen teilweise absorbiert und teilweise reflektiert, wobei ein Anteil in Strahl-Gegenrichtung zurückreflektiert wird. Zur Materialbearbeitung tragen die unverstärkten Laserpulse nicht oder nicht wesentlich bei.

Vorzugsweise umfaßt die erfindungsgemäße Untersuchungseinrichtung eine Detektor, der so angeordnet und eingerichtet ist, daß die von ihm bereitgestellte Information über das Resultat der Applikation der ersten Laserpulse eine Antwort auf die vom Material reflektierte, vorteilhafterweise die in Einstrahl-Gegenrichtung reflektierte Strahlung ist. Die vom Detektor bereitgestellte Information ändert sich hierbei mit dem Signal des reflektierten und detektierten Lichts, also insbesondere in Abhängigkeit von den optischen Eigenschaften des zu bearbeitenden oder bereits bearbeiteten Materials.

Die Auswertung der bereitgestellten Information kann auf dem Fachmann bekannte Weise vorgenommen werden.

Während sich die unverstärkten, teilweise in Strahlrichtung zurückreflektierten Laserpulsanteile also für die Zwecke der Untersuchung nutzen lassen, werden die (ebenfalls teilweise reflektierten) verstärkten (zweiten) Laserpulse regelmäßig durch einen Pulsselektor ausgeblendet, z.B. akusto-optisch, elektronisch oder auf sonstige Weise, insbesondere, um die Übersteuerung des (Photo-)Detektors zu vermeiden.

Die Untersuchung des Materials kann dabei Online (d.h. zeitlich eingebettet in den Vorgang der Materialbearbeitung) oder Offline (vor und/oder nach der Materialbearbeitung) erfolgen.

Gemäß einer weiteren bevorzugten Ausführungsform der erfindungsgemäßen Vorrichtung ist neben den Bauelementen (a)-(c) als weiteres relevantes Bauelement
(d) eine Steuer- und/oder Regeleinrichtung vorgesehen, die sowohl mit der Untersuchungseinrichtung als auch mit der Umwandlungseinrichtung zusammenwirkt, wobei
der Steuer- und/oder Regeleinrichtung Informationen aus der Untersuchungseinrichtung übermittelt werden und
die Steuer- und/oder Regeleinrichtung in Abhängigkeit von diesen Informationen die Umwandlung erster Laserpulse in zweite Laserpulse und/oder die Applikation der zweiten Laserpulse auf das Material steuert bzw. regelt.

Im Rahmen der Steuerung der Umwandlung erster in zweite Laserpulse kann insbesondere der Verstärkungsfaktor, d.h. die Energie der zweiten Laserpulse gesteuert werden.

Es kann alternativ oder zusätzlich eine Schalteinrichtung vorgesehen werden, um die Umwandlung (Verstärkung) erster in zweite Laserpulse vor, nach oder während der Materialbearbeitung manuell oder automatisch (z.B. nach Erreichen eines bestimmten Bearbeitungsergebnisses oder im Falle eines Abweichens von bestimmten Betriebsparametern) zu stoppen bzw. zu verhindern.

Das Material oder der Fortschritt der Materialbearbeitung läßt sich beispielsweise durch Time-of-flight-Messungen untersuchen bzw. bestimmen.

Die bevorzugte Form der Untersuchung des Materials ist aber eine interferometrische Untersuchung wie sie z.B. aus der optischen Kohärenztomographie (OCT) bekannt ist. Interferometrische Untersuchungen und entsprechende Untersuchungseinrichtungen sind insbesondere für die Online-Materialuntersuchung geeignet. Besonders bevorzugt ist (a) die Verknüpfung der OCT-Technik mit bildgebenden Verfahren zur Visualisierung des zu bearbeitenden oder bereits bearbeiteten Materialgebiets und (b) die Verwendung der OCT-Ergebnisse zur Steuerung der Materialbearbeitung.

Eine bevorzugte erfindungsgemäße Vorrichtung umfaßt in integrierter Bauweise eine OCT-Einrichtung und ein Lasersystem zur Materialbearbeitung mit ultrakurzen Laserpulsen. Wie unten noch anhand der Figuren näher erläutert, bedeutet der Begriff "integrierte Bauweise" hierbei, daß wesentliche Bauelemente der bevorzugten erfindungsgemäßen Vorrichtung, unter ihnen die Einrichtung zum Erzeugen der Abfolge erster Laserpulse (das fs-Oszillatorsystem), sowohl für die Durchführung der OCT als auch für die Materialbearbeitung verwendet werden. Im Vergleich mit einer separaten Bauweise ist die bevorzugte Vorrichtung daher sehr kompakt, und es werden aufgrund der geringen Anzahl von Bauelementen beträchtliche Kosten eingespart.

Die bevorzugten Wellenlängen (Frequenzen) für im Rahmen der vorliegenden Erfindung eingesetzte Laserstrahlung liegen im sichtbaren (VIS) oder nah-infraroten (NIR) Bereich, weil die einsetzbaren Optiken und die Vorrichtungen zur Pulserzeugung hierfür vergleichsweise preiswert sind.

Nachfolgend wird eine bevorzugte erfindungsgemäße Vorrichtung in integrierter Bauweise erläutert, wobei bauartliche Variationen im Einzelfall nicht ausgeschlossen sind:

Eine bevorzugte erfindungsgemäße Vorrichtung umfaßt ein fs-Oszillatorsystem zum Erzeugen der Abfolge erster Laserpulse. Die in diesem Oszillatorsystem erzeugte Strahlung (erster Laserpulse) wird einem regenerativen Verstärker zugeführt, in dem auf vorbestimmte Weise ein Bruchteil der ersten Laserpulse hochverstärkt wird. Am Ausgang des Verstärkers treten dann
(a) unverstärkte (erste) Pulse mit hoher Repetitionsfrequenz (z.B. im Bereich mehrerer MHz) und
   - die Abfolge erster Pulse unterbrechend -
(b) verstärkte (zweite) Pulse mit vorbestimmter niedrigerer Pulsfrequenz (z.B. im Bereich einiger kHz)
aus.

Die aus dem Verstärker austretenden ersten und zweiten Laserpulse werden vorteilhafterweise, um eine interferometrische Analyse (OCT) zu ermöglichen, mittels eines Strahlteilers/Kopplers in zwei Strahlen getrennt.

Die Laserpulse des einen (Teil-)Strahls (nachfolgend auch: Referenzpulse) werden - wie in OCT-Einrichtungen üblich - in einen Referenzarm eingestrahlt, in dem sie auf einen Referenzspiegel treffen.

### Die entsprechenden Laserpulse des zweiten (Teil-)Strahls (nachfolgend auch:

Targetpulse) werden auf das zu untersuchende Material (das Target) gerichtet.

Vom Referenzspiegel innerhalb des Referenzarms bzw. von der Oberfläche des zu untersuchenden Materials werden Teile der Referenz- bzw. Targetpulse zurückreflektiert und im Strahteiler/Koppler überlagert.

Nach Austritt aus dem Strahlteiler/Koppler werden die überlagerten unverstärkten Pulse (unverstärkte Referenz- und Targetpulse) einem Photodetektor zugeführt, in dem sich die Interferenz der überlagerten unverstärkten Pulse als periodische Variation des Detektorsignals detektieren läßt, z.B. wenn der Referenzspiegel mit im wesentlichen konstanter Geschwindigkeit bewegt wird.

Die überlagerten verstärkten Laserpulse werden nach Austritt aus dem Strahlteiler/Koppler hingegen mittels eines Pulsselektors (Chopper, AOM, EOM o.dgl.) eliminiert, um eine Übersteuerung des Detektors auszuschließen.

Das Detektorsignal des Photodetektors kann durch einen Demodulator demoduliert werden, das demodulierte Signal kann mittels eines A/D-Wandlers in ein digitales Signal umgewandelt und diese digitale Signal wiederum einem Computer (einer Auswerteeinheit) zum Zwecke der OCT-Analyse zugeführt werden. Bildgebende Verfahren lassen sich auf an sich übliche Weise in den Auswertvorgang integrieren.

Die aus dem Bereich der fs-Mikromaterialbearbeitung bekannten Scan- bzw. Positioniertechnologie kann im Rahmen der vorliegenden Erfindung auch zum Scannen des Materials bei der Durchführung der OCT-Materialuntersuchung (der interferometrischen Analyse) eingesetzt werden.

Dem Fachmann ist bekannt, daß das Interferenz-Signal verschwindet, sobald die optische Weglängen-Differenz zwischen der vom Material reflektierten und der vom Referenzspiegel reflektierten Strahlung größer wird als die Kohärenzlänge der Strahlungsquelle für die ersten Laserpulse.

Bei Einsatz der OCT-Technik dringen die unverstärkten (ersten) Laserpulse partiell in das zu bearbeitende oder bereits bearbeitete Material ein und werden von tieferliegenden, sich in ihrer Reflektivität unterscheidenden Materialschichten reflektiert. Durch Abrastern (Scannen) des Materials ist daher eine (räumliche) Materialuntersuchung in drei Dimensionen möglich. Die dreidimensionalen Materialinformationen können zur Steuerung der fs-Mikromaterialbearbeitung eingesetzt werden. So kann beim Schneiden von Material beispielsweise bereits kurz vor der tatsächlichen Material-Durchtrennung des Materials die verbliebene (noch abzutragende) Materialdicke bestimmt werden. Die Energie der zweiten (verstärkten) Laserpulse kann aufgrund dieser Kenntnisse angepaßt und sonstige Folgeschritte können eingeleitet werden.

Der vorstehend angegebene bevorzugte Aufbau der in die erfindungsgemäße Vorrichtung integrierbaren OCT-Einrichtung entspricht weitgehend dem üblichen Aufbau von OCT-Einrichtungen. Die Ausgestaltung im Einzelfall wird der Fachmann an die jeweiligen Erfordernisse anpassen.

Von besonderer Bedeutung ist im Rahmen der vorliegenden Erfindung, daß die Einrichtung zum Erzeugen der Abfolge erster Laserpulse (z.B. das fs-Oszillatorsystem) sowohl als Bestandteil der integrierten OCT-Einrichtung als auch als Bestandteil der integrierten Laser-Materialbearbeitungseinrichtung aufgefaßt werden kann.

Wie sich aus den vorstehenden Erläuterungen zu einer bevorzugten Ausgestaltung der erfindungsgemäßen Vorrichtung bereits ergibt, werden im Rahmen der vorliegenden Erfindung üblicherweise Teile der Einrichtung zur interferometrischen (OCT-)Untersuchung des Materials in den Strahlengang der Optik integriert, welche die zweiten Laserpulse auf das zu bearbeitende Material appliziert. Auf diese Weise ist eine online-Kontrolle und gegebenenfalls -Steuerung des Bearbeitungsfortschritts möglich.

Der Einsatz der optischen Kohärenztomographie (OCT) wurde bereits in weitem Bereichen der Medizin getestet, z.B. im Rahmen der Bulbuslängenmessung durch Drexler W., Findl O., Schmetterer L., Hitzenberger C.K., Fercher A.F. "Eye elongation during accommodation in humans: differences between emmetropes and myopes" Invest Ophthalmol Vis Sci. 1998 Oct.; 39(11):2140-7 oder im Zusammenhang mit der Untersuchung von Ablagerungen in Herzkranzgefäßen durch Brezinski M.E., Fujimoto J.G. "Optical Coherence Tomography: High-Resolution Imaging in Nontransparent Tissue" IEEE, Journal of sel. top. in Quantum Electronics, Vol.5, No.4, July/August 1999, 1185-92, sowie Fujimoto J.G., Boppart S.A., Tearney G.J., Bouma B.E., Pitris C., Brezinski M.E. "High resolution in vivo intra-arterial imaging with optical coherence tomography" Heart 1999 Aug.; 82(2):128-33.

Die US-Patentschrift 6,004,314 offenbart "optical coherence tomography assisted surgical apparatus". Beschrieben wird auch ein System, das neben einer OCT-Einrichtung einen Behandlungslaser umfaßt, der zur Photoablation eingesetzt werden kann. OCT-Einrichtung und Behandlungslaser wirken mit einem Regel-Computer so zusammen, daß Ergebnisse der OCT-Analyse zur Steuerung des Betriebs des Behandlungslasers eingesetzt werden. Der Behandlungslaser arbeitet jedoch nicht mit ultrakurzen Laserpulsen und die Behandlungs-Laserstrahlung wird auch nicht von der gleichen Laserquelle erzeugt, wie die zur Durchführung der OCT eingesetzte Laserstrahlung.

Wenngleich die in der US 6,004,314 offenbarte Vorrichtung also aus mehreren Gründen nicht mit der erfindungsgemäßen Vorrichtung vergleichbar ist, so lassen sich doch die in der US 6,004,314 offenbarten Verfahren und Einrichtungen zur Durchführung der optischen Kohärenztomographie auch im Rahmen der vorliegenden Erfindung einsetzen.

In der EP 0 956 809 A1 werden OCT-Vorrichtungen beschrieben, die bei Verwendung einer Quelle für ultrakurze Laserpulse auch im Rahmen der vorliegenden Erfindung eingesetzt werden können.

In der DE 199 04 565 A1 werden Geräte und Verfahren zur Erzeugung ultrakurzter optischer Impulse beschrieben. Es wird darauf hingewiesen, daß Impulse im Bereich von 1-10 nJ und höher sowohl direkt als auch mittels gechirpter lmpulsverstärkung erzielt werden können. Die Anwendung bestimmter Geräte und Verfahren im Bereich der optischen Kohärenztomographie (OCT) wird erläutert.

Weitere bevorzugte Ausgestaltungen der erfindungsgemäßen Vorrichtung ergeben sich aus den abhängigen Ansprüchen und den beigefügten Figuren. Es stellen dar:
- Fig. 1: Prinzipdarstellung des Gesamtaufbaus einer erfindungsgemäßen Vorrichtung in integrierter Bauweise und
- Fig. 2: Darstellung der Arbeitsweise eines fs-Lasersystems mit regenerativem Verstärker

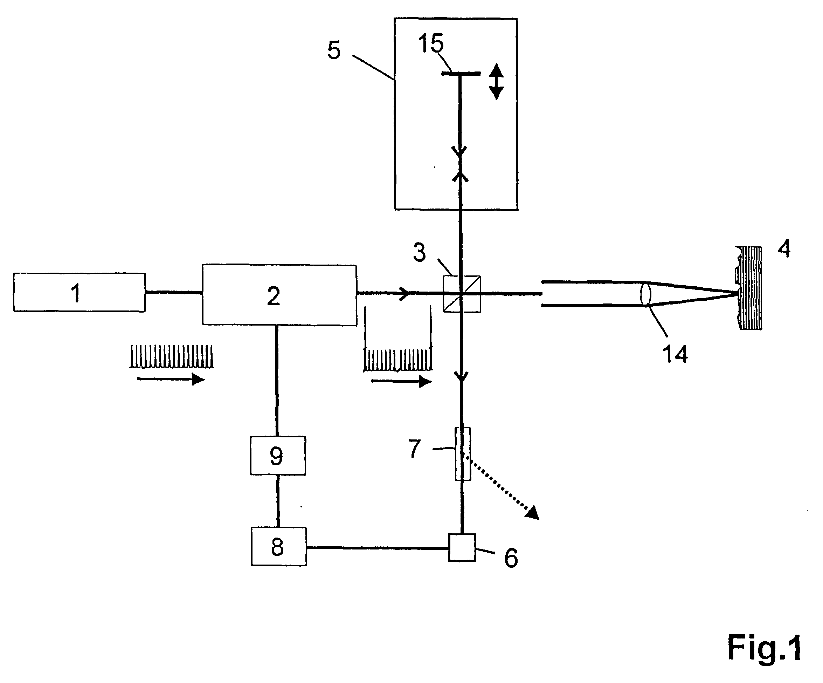

Die in Fig. 1 dargestellte Vorrichtung zur Bearbeitung eines Materials mit ultrakurzen Laserpulsen umfaßt als Einrichtung zum Erzeugen einer Abfolge erster Laserpulse einen fs-Oszillator 1. In diesem fs-Oszillator werden erste Laserpulse erzeugt, mit einer Dauer zwischen 10 Femtosekunden und 300 Pikosekunden und einer Repetitionsrate im Bereich zwischen 100 kHz und 1 GHz. Die Energie der ersten Laserpulse liegt dabei in etwa im Bereich zwischen 100 pJ und 10 nJ.

Die im fs-Oszillator 1 erzeugte Strahlung erster Laserpulse wird einem selektiven Pulsverstärker 2 zugeführt, in dem auf vorbestimmte Weise ein Bruchteil der ersten Laserpulse hochverstärkt und so in zweite Laserpulse umgewandelt wird.

Am Ausgang des Verstärkers 2 treten aus:
(a) unverstärkte (erste) Pulse mit hoher Repetitionsfrequenz (z.B. im Bereich mehrerer MHz) und
   - die Abfolge erster Pulse unterbrechend -
(b) verstärkte (zweite) Pulse mit vorbestimmter niedrigerer Pulsfrequenz (z.B. im Bereich einiger kHz).

Die aus dem Verstärker 2 austretenden ersten und zweiten Laserpulse werden mittels eines Strahlteilers/Kopplers 3 in zwei Strahlen getrennt.

Die Laserpulse eines ersten der zwei Strahlen (Referenzpulse) werden - wie in OCT-Einrichtungen üblich - in einen Referenzarm 5 eingestrahlt, in dem sie auf einen in Strahlrichtung in definierter Weise hin- und her beweglichen Referenzspiegel 15 treffen.

Die Laserpulse des zweiten Strahls (nachfolgend auch: Targetpulse) werden auf das zu untersuchende Material 4 (das Target, in Fig. 1 nur angedeutet) gerichtet. Es wird hierbei eine fokussierende Abbildungsoptik 14 eingesetzt, die so eingerichtet ist, daß es nur bei den hochverstärkten (zweiten) Pulsen zur nichtlinearen Absorption und damit zum Materialabtrag kommt. Die unverstärkten Pulse bewirken im wesentlichen keine Materialveränderung.

Vom Referenzspiegel 15 innerhalb des Referenzarms 5 bzw. von der Oberfläche des zu untersuchenden Materials 4 werden Teile der Referenz- bzw. Targetpulse zurückreflektiert und im Strahlteiler/Koppler 3 überlagert.

Nach Austritt aus dem Strahlteiler/Koppler 3 werden die überlagerten unverstärkten Pulse (unverstärkte Referenz- und Targetpulse) einem Photodetektor 6 zugeführt, in dem sich die Interferenz der überlagerten unverstärkten Pulse als periodische Variation des Detektorsignals detektieren läßt, wenn der Referenzspiegel 15 mit im wesentlichen konstanter Geschwindigkeit bewegt wird.

Die überlagerten verstärkten Laserpulse werden hingegen nach Austritt aus dem Strahlteiler/Koppler 3 mittels eines Choppers 7 eliminiert, um eine Übersteuerung des Detektors 6 auszuschließen.

Das Detektorsignal des Photodetektors 6 wird einer Auswerteeinrichtung 8 zugeführt, wo es auf übliche Weise interferometrisch ausgewertet und unter Einsatz bildgebender Verfahren (weiter-)verarbeitet wird.

Die Auswerteeinrichtung 8 ist mit einer Regeleinrichtung 9 verbunden, die in Abhängigkeit vom Ergebnis der Auswertung den Betrieb des selektiven Verstärkers 2 regelt.

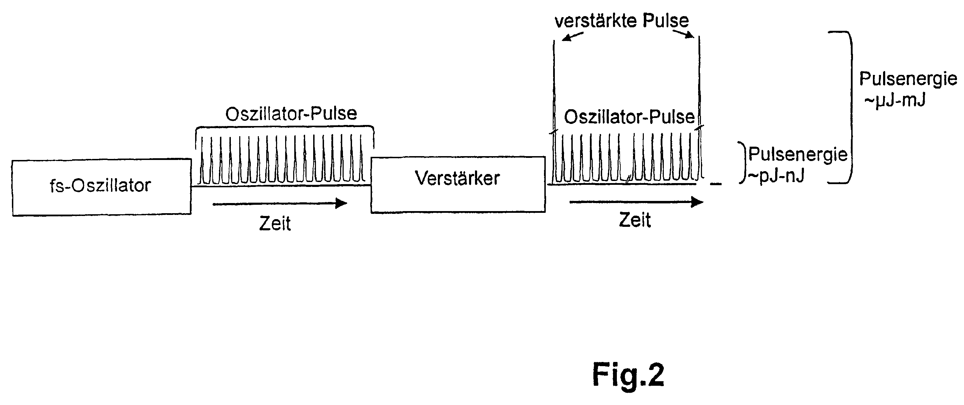

In Fig. 2 ist die Arbeitsweise eines zur Verwendung in der erfindungsgemäßen Vorrichtung geeigneten fs-Lasersystems mit regenerativem Verstärker dargestellt.

In einem fs-Oszillator wird eine Abfolge ultrakurzer (erster) Laserpulse niedriger Energie erzeugt (Oszillatorpulse). Die Energie dieser Pulse ist für die Materialbearbeitung nicht geeignet, ihre Repetitionsrate liegt im MHz-Bereich.

In einem nachgeschalteten regenerativen Verstärker wird daher eine Hochverstärkung der Energie vorgenommen. Da die Leistung des Verstärkers begrenzt ist, werden dabei aus der Abfolge erster Laserpulse in definierter Weise einzelne herausgegriffen und verstärkt. Die Repetitionsrate der verstärkten (zweiten) Pulse liegt im kHz-Bereich.

Aus dem Verstärker treten sowohl unverstärkte (erste) als auch verstärkte (zweite) Laserpulse aus.

Den in Fig. 2 dargestellten Bauelementen fs-Oszillator und Verstärker entsprechen in Fig. 1 die Bauelemente fs-Oszillator 1 und Verstärker 2.

## Patentansprüche

1. Vorrichtung zur Bearbeitung eines Materials mit ultrakurzen Laserpulsen, umfassend:
(a) eine Einrichtung (1) zum Erzeugen einer Abfolge erster Laserpulse, wobei
- die ersten Laserpulse jeweils eine Dauer unter 300 Pikosekunden besitzen und
- die Repetitionsrate für die ersten Laserpulse im Bereich zwischen 100 kHz und 1 GHz liegt,
(b) eine Umwandlungseinrichtung (2) zum Umwandeln eines ersten Satzes der Abfolge erster Laserpulse in eine Abfolge zweiter Laserpulse zur Applikation auf das und zur Bearbeitung des Materials, wobei
- die zweiten Laserpulse jeweils eine Dauer unter 300 Pikosekunden besitzen und
- die Repetitionsrate für die zweiten Laserpulse im Bereich zwischen 1 Hz und 1 MHz liegt,
**gekennzeichnet durch**
(c) eine Untersuchungseinrichtung (3, 5, 6, 7, 15), die dazu eingerichtet ist, erste Laserpulse, die nicht zum ersten Satz gehören, auf das Material zu applizieren, bestimmte Resultate dieser Applikation zu detektieren und diese detektierten Resultate als Information bereitzustellen.

2. Vorrichtung nach Anspruch 1,
**dadurch gekennzeichnet, dass** die Untersuchungseinrichtung
- einen Detektor (6) umfaßt, der die Information als Antwort auf vom Material rückgestreute und/oder reflektierte Strahlung bereitstellt.

3. Vorrichtung nach einem der vorangehenden Ansprüche, weiter umfassend:
(d) eine Steuer- und/oder Regeleinrichtung (9), die sowohl mit der Untersuchungseinrichtung (3, 5, 6, 7, 15) als auch mit der Umwandlungseinrichtung (2) zusammenwirkt, wobei
der Steuer- und/oder Regeleinrichtung (9) Informationen aus der Untersuchungseinrichtung (3, 5, 6, 7, 15) übermittelt werden und
die Steuer- und/oder Regeleinrichtung (9) in Abhängigkeit von diesen Informationen die Umwandlung erster Laserpulse in zweite Laserpulse und/oder die Applikation der zweiten Laserpulse auf das Material steuert bzw. regelt.

4. Vorrichtung nach einem der vorangehenden Ansprüche,
**dadurch gekennzeichnet, dass** die Umwandlungseinrichtung einen selektiven Pulsverstärker (2) umfaßt.

5. Vorrichtung nach Anspruch 4,
**dadurch gekennzeichnet, dass** aus dem selektiven Pulsverstärker (2) erste und zweite Laserpulse austreten, die mittels eines Strahlteilers (3) so in zwei Strahlen getrennt werden, dass einer der Strahlen zur Materialbearbeitung einsetzbar ist.

6. Vorrichtung nach einem der vorangehenden Ansprüche,
**dadurch gekennzeichnet, dass** die Untersuchungseinrichtung zur Durchführung interferometrischer Analysen eingerichtet ist.

7. Vorrichtung nach einem der Ansprüche 2-6,
**dadurch gekennzeichnet, dass** ein Pulsselektor (7) vorgesehen ist, um zu verhindem, dass verstärkte Laserpulse oder deren Interferenz-Produkte auf den Detektor treffen.

8. Verfahren zur Bearbeitung eines Materials mit ultrakurzen Laserpulsen, mit folgenden Schritten:
(a) Erzeugen einer Abfolge erster Laserpulse, wobei
- die ersten Laserpulse jeweils eine Dauer unter 300 Pikosekunden besitzen und
- die Repetitionsrate für die ersten Laserpulse im Bereich zwischen 100 kHz und 1 GHz liegt,
(b) Umwandeln eines Satzes erster Laserpulse in eine Abfolge zweiter Laserpulse zur Bearbeitung des Materials, wobei
- die zweiten Laserpulse jeweils eine Dauer unter 300 Pikosekunden besitzen und
- die Puls-Repetitionsrate im Bereich zwischen 1 Hz und 1 MHz liegt,
(c) Applizieren einer Abfolge ausgewählter zweiter Laserpulse auf das Material, um dieses zu bearbeiten,
**gekennzeichnet durch** den Schritt:
(d) Applizieren eines zweiten Satzes erster Laserpulse auf das Material, um dieses zu untersuchen.

9. Verwendung einer Vorrichtung nach einem der Ansprüche 1-7 zur Materialbearbeitung.

## Claims

1. A device for machining a material with ultrashort laser pulses, comprising
(a) a device (1) for generating a sequence of first laser pulses, wherein
- the first laser pulses each have a duration of less than 300 picoseconds, and
- the repetition rate for the first laser pulses is in the range of between 100 kHz and 1 GHz,
(b) a converter (2) for converting a first set of the sequence of first laser pulses into a sequence of second laser pulses for application to and machining of the material, wherein
- the second laser pulses each have a duration of less than 300 picoseconds, and
- the repetition rate for the second laser pulses is in the range of between 1 Hz and 1 MHz,
**characterized by**
(c) a testing device (3, 5, 6, 7, 15) which is set up to apply first laser pulses, which do not belong to the first set, to the material, to detect specific results of this application and to provide these detected results as information.

2. A device according to Claim 1, **characterized in that** the testing device
- comprises a detector (6) which provides the information as a response to radiation back-scattered and/or reflected by the material.

3. A device according to any one of the preceding Claims, further comprising:
(d) a control and/or regulating device (9), which co-operates both with the testing device (3, 5, 6, 7, 15) and with the converter (2), wherein
information is transmitted from the testing device (3, 5, 6, 7, 15) to the control and/or regulating device (9), the control and/or regulating device (9) controls or regulates the conversion of first laser pulses into second laser pulses and/or the application of the second laser pulses to the material as a function of this information.

4. A device according to any one of the preceding Claims, **characterized in that** the converter comprises a selective pulse amplifier (2).

5. A device according to Claim 4, **characterized in that** first and second laser pulses issue from the selective pulse amplifier (2), which first and second laser pulses are separated by means of a beam divider (3) into two beams in such a way that one of the beams is capable of being used for material machining.

6. A device according to any one of the preceding Claims, **characterized in that** the testing device is set up to carry out interferometric analyses.

7. A device according to any one of Claims 2 to 6, **characterized in that** a pulse selector (7) is provided to prevent amplified laser pulses or their interference products from impinging on the detector.

8. A method of machining a material with ultrashort laser pulses, having the following steps:
(a) generation of a sequence of first laser pulses, wherein
- the first laser pulses each have a duration of less than 300 picoseconds, and
- the repetition rate for the first laser pulses is in the range of between 100 kHz and 1 GHz,
(b) conversion of a set of first laser pulses into a sequence of second laser pulses for machining the material, wherein
- the second laser pulses each have a duration of less than 300 picoseconds, and
- the pulse repetition rate is in the range of between 1 Hz and 1 MHz,
(c) application of a sequence of selected second laser pulses to the material in order to machine this,
**characterized by** the step:
(d) application of a second set of first laser pulses to the material in order to test this.

9. Use of a device according to any one of Claims 1 to 7 for material machining.

## Revendications

1. Appareil pour l'usinage d'un matériau avec des impulsions de laser ultracourtes, comprenant :
(a) un dispositif (1) pour la production d'un train de premières impulsions de laser dans lequel :
les premières impulsions de laser ont une durée inférieure à 300 picosecondes et
que la fréquence de répétition des premières impulsions est comprise entre 100 kHz et 1 GHz.
(b) un dispositif de transformation (2) pour la transformation d'un premier ensemble de la suite de premières impulsions de laser en une suite de deuxièmes impulsions de laser pour l'application sur le matériau et pour l'usinage du matériau, dans lequel
les deuxièmes impulsions de laser ont chaque fois une durée inférieure à 300 picosecondes et
que la fréquence de répétition des deuxièmes impulsions de laser est comprise entre 1 Hz et 1 MHz.
**caractérisé par**
(c) un dispositif d'analyse (3, 5, 6, 7, 15) installé de manière à appliquer sur le matériau les premières impulsions de laser, qui ne font pas partie du premier ensemble, de détecter certains résultats de cette application et de mettre ces résultats détectés à disposition en tant qu'information.

2. Dispositif selon la revendication 1,
**caractérisé en ce que** le dispositif d'analyse comprend un détecteur (6) qui met à disposition l'information en réponse au rayonnement rétrodiffusé et/ou réfléchi du matériau.

3. Dispositif selon l'une des revendications précédentes, comprenant en outre :
(d) un dispositif de commande et/ou de réglage (9) qui coopère aussi bien avec le dispositif d'analyse (3, 5, 6, 7, 15) qu'avec le dispositif de transformation (2), dans lequel le dispositif de commande et/ou de réglage (9) reçoit des informations du dispositif d'analyse (3, 5, 6, 7, 15), le dispositif de commande et/ou de réglage (9) commandant ou règlant en fonction de ces informations la transformation des premières impulsions de laser en deuxièmes impulsions de laser et/ou l'application des deuxièmes impulsions de laser sur le matériau.

4. Dispositif selon l'une des revendications précédentes,
**caractérisé en ce que** le dispositif de transformation comprend un amplificateur d'impulsions sélectif (2).

5. Dispositif selon la revendication 4,
**caractérisé en ce que** de l'amplificateur d'impulsions sélectif (2) sortent des premières et deuxièmes impulsions, qui sont séparées en deux rayons au moyen d'un séparateur de faisceau (3) de telle manière que l'un des rayons puisse être utilisé pour l'usinage du matériau.

6. Dispositif selon l'une des revendications précédentes,
**caractérisé en ce que** le dispositif d'analyse est installé pour réaliser des analyses interférométriques.

7. Dispositif selon l'une des revendications 2 à 6,
**caractérisé en ce qu'**un sélecteur d'impulsions (7) est prévu pour empêcher que des impulsions de laser renforcées ou leurs produits d'interférence n'atteignent le détecteur.

8. Dispositif pour l'usinage d'un matériau avec des impulsions de laser ultracourtes, comprenant les phases suivantes :
(a) Production d'une suite de premières impulsions de laser selon laquelle
- les premières impulsions de laser ont chaque fois une durée inférieure à 300 picosecondes et
- la fréquence de répétition des premières impulsions de laser est comprise entre 100 kHz et 1 GHz ;
(b) Transformation d'un ensemble de premières impulsions de laser en une suite de deuxièmes impulsions de laser pour l'usinage du matériau, selon laquelle
- les deuxièmes impulsions de laser ont chaque fois une durée inférieure à 300 picosecondes et
- la fréquence de répétition d'impulsions est comprise entre 1 Hz et 1MHz ;
(c) Application d'une suite de deuxièmes impulsions de laser sélectionnés sur le matériau pour l'usinage de celui-ci,
**caractérisé par** l'étape :
(d) Application d'un deuxième ensemble de premières impulsions de laser sur le matériau pour l'analyse de celui-ci.

9. Utilisation d'un dispositif selon les revendications 1 à 7 pour l'usinage du matériau.
